# EUROPEAN PATENT SPECIFICATION

(11) **EP 1 904 538 B1**
(45) Date of publication and mention of the grant of the patent: **14.04.2010**
(21) Application number: 06787095.6
(22) Date of filing: 14.07.2006
(51) Int. Cl.: C08F 14/18

(54) **AQUEOUS EMULSION POLYMERIZATION OF FLUORINATED MONOMERS USING A PERFLUOROPOLYETHER SURFACTANT**
POLYMERISIERUNG EINER WÄSSRIGEN EMULSION AUS FLUORINIERTEN MONOMEREN MITHILFE EINES PERFLUORPOLYETHER-TENSIDS
POLYMERISATION EN EMULSION AQUEUSE DE MONOMERES FLUORES UTILISANT UN TENSIOACTIF PERFLUOROPOLYETHER

(30) Priority: 15.07.2005 GB 0514387
(43) Date of publication of application: 02.04.2008
(73) Proprietor: 3M Innovative Properties Company, St. Paul MN 55133-3427 (US)
(72) Inventor: HINTZER, Klaus, D-41453 Neuss (DE); JÜRGENS, Michael, D-41453 Neuss (DE); KASPAR, Harald, D-41453 Neuss (DE); LOCHHAAS, Kai H.,, D-41453 Neuss (DE); MAURER, Andreas R.,, D-41453 Neuss (DE); ZIPPLIES, Tilman, D-41453 Neuss (DE)
(74) Representative: Kurz, Arnd
(86) International application number: PCT/US2006/027144
(87) International publication number: WO 2007/011631

(56) References cited:
- EP-A2- 0 219 065
- WO-A-02/095121
- WO-A-03/087179
- WO-A-2004/067588
- WO-A1-00/71590
- US-A- 4 864 006

## Description

### Cross-Reference To Related Application

This application claims priority to Great Britain Patent Application No. GB0514387.0, filed on July 15, 2005.

The present invention relates to the aqueous emulsion polymerization of fluorinated monomers to produce fluoropolymers.

### Background of the invention

Fluoropolymers, i.e. polymers having a fluorinated backbone, have been long known and have been used in a variety of applications because of several desirable properties such as heat resistance, chemical resistance, weatherability, UV-stability. The various fluoropolymers are for example described in "Modern Fluoropolymers", edited by John Scheirs, Wiley Science 1997. Commonly known or commercially employed fluoropolymers include polytetrafluoroethylene (PTFE), copolymers of tetrafluoroethylene (TFE) and hexafluoropropylene (HFP) (FEP polymers), perfluoroalkoxy copolymers (PFA), ethylene-tetrafluoroethylene (ETFE) copolymers, terpolymers of tetrafluoroethylene, hexafluoropropylene and vinylidene fluoride (THV) and polyvinylidene fluoride polymers (PVDF). Commercially employed fluoropolymers also include fluoroelastomers and thermoplastic fluoropolymers.

Several methods are known to produce fluoropolymers. Such methods include suspension polymerization as disclosed in e.g. U.S. Patent No. 3,855,191, U.S. Patent No. 4, 439,385 and EP 649863; aqueous: emulsion polymerization as disclosed in e. g. U.S. Patent No. 3,635,926 and U.S. Patent No. 4,262,101; solution polymerization as disclosed in U.S. Patent No. 3,642,742, U.S. Patent No. 4,588,796 and U.S. Patent No. 5,663,255; polymerization using supercritical CO₂ as disclosed in JP 46011031 and EP 964009 and polymerization in the gas phase as disclosed in U.S. Patent No. 4,861,845.

Currently, the most commonly employed polymerization methods include suspension polymerization and especially aqueous emulsion polymerization. The aqueous emulsion polymerization normally involves the polymerization in the presence of a fluorinated surfactant, which is generally used for the stabilization of the polymer particles formed. The suspension polymerization generally does not involve the use of surfactant but results in substantially larger polymer particles than in case of the aqueous emulsion polymerization. Thus, the polymer particles in case of suspension polymerization will quickly settle out whereas in case of dispersions obtained in emulsion polymerization generally good stability over a long period of time is obtained.

An aqueous emulsion polymerization wherein no surfactant is used has been described in U.S. Patent No. 5,453,477, WO 96/24622 and WO 97/17381 to generally produce homo- and copolymers of chlorotrifluoroethylene (CTFE). For example, WO 97/17381 discloses an aqueous emulsion polymerization in the absence of a surfactant wherein a radical initiator system of a reducing agent and oxidizing agent is used to initiate the polymerization and whereby the initiator system is added in one or more further charges during the polymerization. So-called emulsifier free polymerization has further been disclosed in WO 02/88206 and WO 02/88203. In the latter PCT application, the use of dimethyl ether or methyl tertiary butyl ether is taught to minimize formation of low molecular weight fractions that may be extractable from the fluoropolymer. WO 02/88207 teaches an emulsifier free polymerization using certain chain transfer agents to minimize formation of water soluble fluorinated compounds. An emulsifier free polymerization is further disclosed in RU 2158274 for making an elastomeric copolymer of hexafluoropropylene and vinylidene fluoride.

Notwithstanding the fact that emulsifier free polymerizations are known, the aqueous emulsion polymerization process in the presence of fluorinated surfactants is still a desirable process to produce fluoropolymers because it can yield stable fluoropolymer particle dispersions in high yield and in a more environmental friendly way than for example polymerizations conducted in an organic solvent. Frequently, the emulsion polymerization process is carried out using a perfluoroalkanoic acid or salt thereof as a surfactant. These surfactants are typically used as they provide a wide variety of desirable properties such as high speed of polymerization, good copolymerization properties of fluorinated olefins with comonomers, small particle sizes of the resulting dispersion can be achieved, good polymerization yields i.e. a high amount of solids can be produced, good dispersion stability,. However, environmental concerns have been raised against these surfactants and moreover these surfactants are generally expensive.
Alternative surfactants to the perfluoroalkanoic acids or salts thereof have also been proposed in the art for conducting the emulsion polymerization of fluorinated monomers.

For example, surfactants of the general formula R_{f}-C₂H₄-SO₃M, wherein R_{f} represents a perfluorinated aliphatic group and wherein M represents a cation, have been disclosed in U.S. Patent No. 5,789,508, U.S. Patent No. 4,025,709, U.S. Patent No. 5,688,884 and U.S. Patent No. 4,380,618.

U.S. Patent No. 5,763,552 discloses partially fluorinated surfactants of the general formula R_{f}-(CH₂)ₘ-R'_{f}-COOM wherein R_{f} represents a perfluoroalkyl group or a perfluoroalkoxy group of 3 to 8 carbon atoms, R'_{f} represents a perfluoroalkylene of 1 to 4 carbon atoms and m is 1-3.

U.S. Patent No. 4,621,116 discloses perfluoroalkoxy benzene sulphonic acids and salts thereof in the aqueous emulsion polymerization of fluorinated monomers.

U.S. Patent No. 3,271,341 teaches perfluoropolyethers of the general formula: F-(CF₂)ₘ-O-[CFX-CF₂-O]ₙ-CFX-COOA
wherein m is 1 to 5, X is F or CF₃, A is a monovalent cation and n is 0 to 10. The perfluoropolyethers are taught as emulsifiers in the emulsion polymerization of ethylenically unsaturated monomers.

U.S. Publication No. 2005/0090613 discloses fluorinated polyethers of the formula: F-(CF₂)ₘ-O-[CFX-CF₂-O]ₙ-CFX-COOA
wherein m is 3 to 10, X is F or a perfluoroalkyl group, n is 0, 1 or 2 and A is the counter ion of the carboxylic anion. These polyethers are taught as emulsifiers in the emulsion polymerization of fluorinated olefins.

The use of perfluoropolyethers having neutral end groups in an aqueous emulsion polymerization is disclosed in U.S. Patent No. 4,864,006, U.S. Patent No. 4,789,717 and EP 625526. For example U.S. Patent No. 4,864,006 and EP 625526 disclose the use of microemulsion prepared from perfluoropolyethers having neutral end groups in an aqueous emulsion polymerization of fluorinated monomers. In a particular embodiment, a certain perfluoropolyether having carboxylic end groups is taught to emulsify the neutral perfluoropolyether.

EP 1,334,996 discloses certain perfluoropolyethers having carboxylic acid groups or salts thereof at both end groups, i.e. the perfluoropolyethers are bifunctional. The perfluoropolyethers are taught for use in aqueous dispersions of fluoropolymers and in the preparation of such dispersion by aqueous emulsion polymerization.

WO 00/71590 teaches the use of a combination of perfluoropolyether surfactants having a carboxylic acid group or salt thereof with a fluoroalkyl carboxylic acid or sulphonic acid or salt thereof. It is taught that the perfluoropolyether surfactants on their own are not very powerful surfactants. WO2003/087179 and WO2004/067588 describe the use of perfluorinated polymers and/or ionomers as surfactant emulsifies in the emulsion polymerisation of fluorinated monomers.

### Summary of the invention

It would now be desirable to find an alternative emulsion polymerization process in which the use of perfluoroalkanoic acids and salts thereof as a fluorinated surfactant can be avoided. In particular, it would be desirable to find an alternative surfactant or dispersant, in particular one that is more environmentally friendly, for example has a low toxicity and/or shows no or only little bioaccumulation. It would also be desirable that the alternative surfactant has good chemical and thermal stability enabling polymerization over a wide range of conditions of for example temperature and/or pressure. Desirably, the alternative surfactant or dispersant allows for a high polymerization rate, good dispersion stability, good yields, good copolymerization properties and/or the possibility of obtaining a wide variety of particle sizes including small particle sizes. The properties of the resulting fluoropolymer should generally not be negatively influenced and preferably would be improved. Desirably, the resulting dispersions have good or excellent properties in coating applications and/or impregnation of substrates, including for example good film forming properties. It would further be desirable that the polymerization can be carried out in a convenient and cost effective way, preferably using equipment commonly used in the aqueous emulsion polymerization of fluorinated monomers. Additionally, it may be desirable to recover the alternative surfactant or dispersant from weste water streams and/or to remove or recover the surfactant from the dispersion subsequent to the polymerization. Desirably, such recovery can proceed in an easy, convenient and cost effective way.

It has been found that perfluoropolyethers of the following formula (I) or (II) are effective in the aqueous emulsion polymerization, even when used without the addition of other surfactants such as perfluoroalkanoic acids and salts thereof. In particular, the perfluoropolyether surfactants correspond to formula (I) or (II)

CF₃-(OCF₂)ₘ-O-CF₂-X (I)

wherein m has a value of 1 to 6 and X represents a carboxylic acid group or salt thereof;

CF₃-O-(CF₂)₃-(OCF(CF₃)-CF₂)_{z}-O-L-Y (II)

wherein z has a value of 0, 1, 2 or 3, L represents a divalent linking groups selected from -CF₂- and -CF₂CF₂- and Y represents a carboxylic acid group or salt thereof. Examples of carboxylic acid salts include sodium, potassium and ammonium (NH₄) salts.

Thus, in one aspect, the invention relates to a method for making a fluoropolymer comprising an aqueous emulsion polymerization of one or more fluorinated monomers wherein said aqueous emulsion polymerization is carried out in the presence of a perfluoropolyether as emulsifier, said perfluoropolyether being selected from the group consisting of perfluoropolyethers according to above formula (I), perfluoropolyethers according to above formula (II) and mixtures of perfluoropolyethers according to formula (I) and/or (II).

In a further aspect, the invention relates to an aqueous dispersion of a fluoropolymer comprising a perfluoropolyether as an emulsifier, said perfluoropolyether being selected from the group consisting of perfluoropolyethers according to above formula (I), perfluoropolyethers according to above formula (II) and mixtures of perfluoropolyethers according to formula (I) and/or (II).

Since the aqueous emulsion polymerization can be carried out without the need for using a perfluoroalkanoic acid, dispersions can be readily obtained that are free of such perfluoroalkanoic acids or salts thereof. Thus, in a further aspect, the present invention relates to an aqueous dispersion of a fluoropolymer comprising a perfluoropolyether selected from the group consisting of perfluoropolyethers according to above formula (I), perfluoropolyethers according to above formula (II) and mixtures of perfluoropolyethers according to formula (I) and/or (II) as an emulsifier and wherein the aqueous dispersion is free of perfluorinated alkanoic acids or salts thereof.

### Detailed Description of the invention

The resulting dispersions can be used in a variety of applications including coating and impregnation of substrates. Generally, a non-ionic surfactant should be added to the dispersion for such applications. Accordingly, the invention in a further aspect relates to aqueous dispersions of a fluoropolymer comprising a perfluoropolyether selected from the group consisting of perfluoropolyethers according to above formula (I), perfluoropolyethers according to above formula (II) and mixtures of perfluoropolyethers according to formula (I) and/or (II) as an emulsifier and additionally comprising a non-ionic surfactant, typically in an amount of 1 to 12% by weight based on the weight of fluoropolymer solids.

The aqueous emulsion polymerization of fluorinated monomers, including gaseous fluorinated monomers, can be conducted using one or more perfluoropolyethers according to formula (I) and/or (II) as emulsifier. In one particular embodiment, the polymerization may be carried out using a perfluoropolyether or mixture of perfluoropolyethers according to formula (I). In another embodiment, a perfluoropolyether or mixture of perfluoropolyethers according to formula (II) is used. In yet another embodiment, a mixture of one or more perfluoropolyethers according to formula (I) and one or more perfluoropolyethers according to formula (II) is used.

Perfluoropolyethers of formula (I) are commercially available from Anles Ltd., St. Petersburg, Russia. These compounds may be prepared for example as described by Ershov and Popova in Fluorine Notes 4(11), 2002. Also, these perfluoropolyethers typically form as byproducts in the manufacturing of hexafluoropropylene oxide by direct oxidation of hexafluoropropylene.

Perfluoropolyethers according to formula (II) can be derived from reactants that are also used in the manufacturing of fluorinated vinyl ethers as described in U.S. Patent No. 6,255,536. Accordingly, these perfluoropolyethers can be obtained in an economically attractive way as they can be derived from other starting products that may be used and needed in the manufacturing of fluoromonomers and fluoropolymers.

In accordance with the present invention, the perfluoropolyether is used in the aqueous emulsion polymerization of one or more fluorinated monomers, in particular gaseous fluorinated monomers. By gaseous fluorinated monomers is meant monomers that are present as a gas under the polymerization conditions. In a particular embodiment, the polymerization of the fluorinated monomers is started in the presence of the perfluoropolyether, i.e. the polymerization is initiated in the presence of the perfluoropolyether. The amount of perfluoropolyether surfactant used may vary depending on desired properties such as amount of solids, particle size. Generally the amount of perfluoropolyether surfactant will be between 0.01% by weight based on the weight of water in the polymerization and 5% by weight, for example between 0.05% by weight and 2% by weight. A practical range is between 0.05% by weight and 1% by weight. While the polymerization is generally initiated in the presence of the perfluoropolyether surfactant, it is not excluded to add further perfluoropolyether surfactant during the polymerization although such will generally not be necessary. Nevertheless, it may be desirable to add certain monomer to the polymerization in the form of an aqueous emulsion. For example, fluorinated monomers and in particular perfluorinated co-monomers that are liquid under the polymerization conditions may be advantageously added in the form of an aqueous emulsion. Such emulsion of such co-monomers is preferably prepared using the perfluoropolyether as an emulsifier.

The aqueous emulsion polymerization may be carried out at a temperatures between 10 to 100°C, preferably 30°C to 80°C and the pressure is typically between 2 and 30 bar, in particular 5 to 20 bar. The reaction temperature may be varied during the polymerization to influence the molecular weight distribution, i.e., to obtain a broad molecular weight distribution or to obtain a bimodal or multimodal molecular weight distribution.

The aqueous emulsion polymerization is typically initiated by an initiator including any of the initiators known for initiating a free radical polymerization of fluorinated monomers. Suitable initiators include peroxides and azo compounds and redox based initiators. Specific examples of peroxide initiators include, hydrogen peroxide, sodium or barium peroxide, diacylperoxides such as diacetylperoxide, disuccinyl peroxide, dipropionylperoxide, dibutyrylperoxide, dibenzoylperoxide, benzoylacetylperoxide, diglutaric acid peroxide and dilaurylperoxide, and further per-acids and salts thereof such as e.g. ammonium, sodium or potassium salts. Examples of per-acids include peracetic acid. Esters of the peracid can be used as well and examples thereof include tert.-butylperoxyacetate and tert.-butylperoxypivalate. Examples of inorganic include for example ammonium- alkali- or earth alkali salts of persulfates, permanganic or manganic acid or manganic acids. A persulfate initiator, e.g. ammonium persulfate (APS), can be used on its own or may be used in combination with a reducing agent. Suitable reducing agents include bisulfites such as for example ammonium bisulfite or sodium metabisulfite, thiosulfates such as for example ammonium, potassium or sodium thiosulfate, hydrazines, azodicarboxylates and azodicarboxyldiamide (ADA). Further reducing agents that may be used include sodium formaldehyde sulfoxylate (Rongalit®) or fluoroalkyl sulfinates as disclosed in U.S. Patent No. 5,285,002. The reducing agent typically reduces the half-life time of the persulfate initiator. Additionally, a metal salt catalyst such as for example copper, iron or silver salts may be added. The amount of initiator may be between 0.01% by weight (based on the fluoropolymer solids to be produced) and 1% by weight. In one embodiment, the amount of initiator is between 0.05 and 0.5% by weight. In another embodiment, the amount may be between 0.05 and 0.3% by weight.

The aqueous emulsion polymerization system may further comprise other materials, such as buffers and, if desired, complex-formers or chain-transfer agents. Examples of chain transfer agents that can be used include dimethyl ether, methyl t-butyl ether, alkanes having 1 to 5 carbon atoms such as ethane, propane and n-pentane, halogenated hydrocarbons such as CCl₄, CHCl₃ and CH₂Cl₂ and hydrofluorocarbon compounds such as CH₂F-CF₃ (R134a).

Examples of fluorinated monomers that may be polymerized using the perfluoropolyether surfactant as an emulsifier include partially or fully fluorinated gaseous monomers including fluorinated olefins such as tetrafluoroethylene, chlorotrifluoroethylene, hexafluoropropylene, vinyl fluoride, vinylidene fluoride, partially or fully fluorinated allyl ethers and partially or fully fluorinated vinyl ethers. The polymerization may further involve non-fluorinated monomers such as ethylene and propylene.

Further examples of fluorinated monomers that may be used in the aqueous emulsion polymerization according to the invention include those corresponding to the formula:

CF₂=CF-O-R_{f} (III)

wherein R_{f} represents a perfluorinated aliphatic group that may contain one or more oxygen atoms. Preferably, the perfluorovinyl ethers correspond to the general formula:

CF₂=CFO(R_{f}O)ₙ(R'_{f}O)ₘR"_{f} (IV)

wherein R_{f} and R'_{f} are different linear or branched perfluoroalkylene groups of 2-6 carbon atoms, m and n are independently 0-10, and R"_{f} is a perfluoroalkyl group of 1-6 carbon atoms. Examples of perfluorovinyl ethers according to the above formulas include perfluoro-2-propoxypropylvinyl ether (PPVE-2), perfluoro-3-methoxy-n-propylvinyl ether, perfluoro-2-methoxy-ethylvinyl ether, perfluoromethylvinyl ether (PMVE), perfluoro-n-propylvinyl ether (PPVE-1) and

CF₃-(CF₂)₂-O-CF(CF₃)-CF₂-O-CF(CF₃)-CF₂-O-CF=CF₂.

Still further, the polymerization may involve comonomers that have a functional group such as for example a group capable of participating in a peroxide cure reaction. Such functional groups include halogens such as Br or I as well as nitrile groups. Specific examples of such comonomers that may be listed here include
(a) bromo- or iodo- (per)fluoroalkyl-(per)fluorovinylethers having the formula:

   Z-R_{f}-O-CX=CX₂

   wherein each X may be the same or different and represents H or F, Z is Br or I, R_{f} is a (per)fluoroalkylene C₁-C₁₂, optionally containing chlorine and/or ether oxygen atoms; for example: BrCF₂-O-CF=CF₂, BrCF₂CF₂-O-CF=CF₂, BrCF₂CF₂CF₂-O-CF=CF₂, CF₃CFBrCF₂-O-CF=CF₂,; and
(b) bromo- or iodo containing fluoroolefins such as those having the formula:

   Z'-(R_{f}')ᵣ-CX=CX₂,
wherein each X independently represents H or F, Z' is Br or I, R_{f}' is a perfluoroalkylene C₁-C₁₂, optionally containing chlorine atoms and r is 0 or 1; for instance: bromotrifluoroethylene, 4-bromo-perfluorobutene-1,; or bromofluoroolefins such as 1-bromo-2,2-difluoroethylene and 4-bromo-3,3,4,4-tetrafluorobutene-1.

Examples of nitrile containing monomers that may be used include those that correspond to one of the following formulas:

CF₂=CF-CF₂-O-R_{f}-CN

CF₂=CFO(CF₂)_{L}CN

CF₂=CFO[CF₂CF(CF₃)O]_{g}(CF₂)ᵥOCF(CF₃)CN

CF₂=CF[OCF₂CF(CF₃)]ₖO(CF₂)ᵤCN

wherein L represents an integer of 2 to 12; g represents an integer of 0 to 4; k represents 1 or 2; v represents an integer of 0 to 6; u represents an integer of 1 to 6, R_{f} is a perfluoroalkylene or a bivalent perfluoroether group. Specific examples of nitrile containing liquid fluorinated monomers include perfluoro(8-cyano-5-methyl-3,6-dioxa-1-octene), CF₂=CFO(CF₂)₅CN, and CF₂=CFO(CF₂)₃OCF(CF₃)CN.

In accordance with a particular embodiment, a fluorinated liquid may be added to the polymerization system. By the term 'liquid' is meant that the compound should be liquid at the conditions of temperature and pressure employed in the polymerization process. Typically the fluorinated liquid has a boiling point of at least 50°C, preferably at least 80°C at atmospheric pressure. Fluorinated liquids include in particular highly fluorinated hydrocarbons as well as liquid fluorinated monomers. The term 'highly fluorinated' in connection with the present invention is used to indicate compounds in which most and preferably all hydrogen atoms have been replaced with fluorine atoms as well as compounds wherein the majority of hydrogen atoms have been replaced with fluorine atoms and where most or all of the remainder of the hydrogen atoms has been replaced with bromine, chlorine or iodine. Typically, a highly fluorinated compound in connection with this invention will have only few, e.g., 1 or 2 hydrogen atoms replaced by a halogen other than fluorine and/or have only one or two hydrogen atoms remaining. When not all hydrogen atoms are replaced by fluorine or another halogen, i.e., the compound is not perfluorinated, the hydrogen atoms should generally be in a position on the compound such that substantially no chain transfer thereto occurs, i.e., such that the compound acts as an inert in the polymerization, i.e., the compound does not participate in the free radical polymerization. Compounds in which all hydrogens have been replaced by fluorine and/or other halogen atoms are herein referred to as 'perfluorinated'.

Liquid and fluorinated hydrocarbon compounds that can be used as fluorinated liquid, typically comprise between 3 and 25 carbon atoms, preferably between 5 and 20 carbon atoms and may contain up to 2 heteroatoms selected from oxygen, sulfur or nitrogen. Preferably the highly fluorinated hydrocarbon compound is a perfluorinated hydrocarbon compound. Suitable perfluorinated hydrocarbons include perfluorinated saturated linear, branched and/or cyclic aliphatic compounds such as a perfluorinated linear, branched or cyclic alkane; a perfluorinated aromatic compound such as perfluorinated benzene, or perfluorinated tetradecahydro phenanthene. It can also be a perfluorinated alkyl amine such as a perfluorinated trialkyl amine. It can further be a perfluorinated cyclic aliphatic, such as decalin; and preferably a heterocyclic aliphatic compound containing oxygen or sulfur in the ring, such as perfluoro-2-butyl tetrahydrofuran.

Specific examples of perfluorinated hydrocarbons include perfluoro-2-butyltetrahydrofuran, perfluorodecalin, perfluoromethyldecalin, perfluoromethylcyclohexane, perfluoro(1,3-dimethylcyclohexane), perfluorodimethyldecahydronaphthalene, perfluorofluorene, perfluoro(tetradecahydrophenanthrene), perfluorotetracosane, perfluorokerosenes, octafluoronaphthalene, oligomers of poly(chlorotrifluoroethylene), perfluoro(trialkylamine) such as perfluoro(tripropylamine), perfluoro(tributylamine), or perfluoro(tripentylamine), and octafluorotoluene, hexafluorobenzene, and commercial fluorinated solvents, such as Fluorinert FC-75, FC-72, FC-84, FC-77, FC-40, FC-43, FC-70, FC 5312 or FZ 348 all produced by 3M Company. A suitable inert liquid and highly fluorinated hydrocarbon compound is

C₃F₇-O-CF(CF₃)-CF₂-O-CHF-CF₃.

The fluorinated liquid may also comprise liquid fluorinated monomer alone or in combination with above described liquid fluorinated compounds. Examples of liquid fluorinated monomers include monomers that are liquid under the polymerization conditions and that are selected from (per)fluorinated vinyl ethers, (per)fluorinated allyl ethers and (per)fluorinated alkyl vinyl monomers.

When a fluorinated liquid is used, it will generally be preferred to emulsify the fluorinated liquid. Preferably, the fluorinated liquid is emulsified using the perfluoropolyether surfactant. Also, when a fluorinated liquid is used in the polymerization, it will be advantageous that at least a portion thereof or all is provided at the start of the polymerization such that the polymerization is initiated in the presence of the emulsified fluorinated liquid. The use of the fluorinated liquid may improve such properties as the rate of polymerization, incorporation of co-monomers and may reduce the particle size and/or improve the amount of solids that can be obtained at the end of the polymerization.

The aqueous emulsion polymerization may be used to produce a variety of fluoropolymers including perfluoropolymers, which have a fully fluorinated backbone, as well as partially fluorinated fluoropolymers. Also the aqueous emulsion polymerization may result in melt-processible fluoropolymers as well as those that are not melt-processible such as for example polytetrafluoroethylene and so-called modified polytetrafluoroethylene. The polymerization process can further yield fluoropolymers that can be cured to make fluoroelastomers as well as fluorothermoplasts. Fluorothermoplasts are generally fluoropolymers that have a distinct and well noticeable melting point, typically in the range of 60 to 340°C or between 100 and 320°C. They thus have a substantial crystalline phase. Fluoropolymers that are used for making fluoroelastomers typically are amorphous and/or have a neglectable amount of crystallinity such that no or hardly any melting point is discernable for these fluoropolymers.

The aqueous emulsion polymerization results in a dispersion of the fluoropolymer in water. Generally the amount of solids of the fluoropolymer in the dispersion directly resulting from the polymerization will vary between 3 % by weight and about 40% by weight depending on the polymerization conditions. A typical range is between 5 and 30% by weight. The particle size (volume average particle size) of the fluoropolymer is typically between 50nm and 350nm with a typical particle size being between 100nm and about 300nm. The amount of perfluoropolyether according to formula (I) and/or (II) in the resulting dispersion is typically between 0.001 and 5% by weight based on the amount of fluoropolymer solids in the dispersion. A typical amount may be from 0.01 to 2% by weight or from 0.02 to 1% by weight.

The fluoropolymer may be isolated from the dispersion by coagulation if a polymer in solid form is desired. Also, depending on the requirements of the application in which the fluoropolymer is to be used, the fluoropolymer may be post-fluorinated so as to convert any thermally unstable end groups into stable CF₃ end groups. The fluoropolymer may be post-fluorinated as described in for example EP 222945. Generally, the fluoropolymer will be post fluorinated such that the amount of end groups in the fluoropolymer other than CF₃ is less than 80 per million carbon atoms.

For coating applications, an aqueous dispersion of the fluoropolymer is desired and hence the fluoropolymer will not need to be separated or coagulated from the dispersion. To obtain a fluoropolymer dispersion suitable for use in coating applications such as for example in the impregnation of fabrics or in the coating of metal substrates to make for example cookware, it will generally be desired to add further stabilizing surfactants and/or to further increase the fluoropolymer solids. For example, non-ionic stabilizing surfactants may be added to the fluoropolymer dispersion. Typically these will be added thereto in an amount of 1 to 12 % by weight based on fluoropolymer solids. Examples of non-ionic surfactants that may be added include

R¹-O-[CH₂CH₂O]ₙ-[R²O]ₘ-R³ (V)

wherein R¹ represents an aromatic or aliphatic hydrocarbon group having at least 8 carbon atoms, R² represents an alkylene having 3 carbon atoms, R³ represents hydrogen or a C₁-C₃ alkyl group, n has a value of 0 to 40, m has a value of 0 to 40 and the sum of n+m being at least 2. It will be understood that in the above formula (V), the units indexed by n and m may appear as blocks or they may be present in an alternating or random configuration. Examples of non-ionic surfactants according to formula (V) above include alkylphenol oxy ethylates such as ethoxylated p-isooctylphenol commercially available under the brand name TRITON™ such as for example TRITON™ X 100 wherein the number of ethoxy units is about 10 or TRITON™ X 114 wherein the number of ethoxy units is about 7 to 8. Still further examples include those in which R¹ in the above formula (V) represents an alkyl group of 4 to 20 carbon atoms, m is 0 and R³ is hydrogen. An example thereof includes isotridecanol ethoxylated with about 8 ethoxy groups and which is commercially available as GENAPOL®X080 from Clariant GmbH. Non-ionic surfactants according to formula (V) in which the hydrophilic part comprises a block-copolymer of ethoxy groups and propoxy groups may be used as well. Such non-ionic surfactants are commercially available from Clariant GmbH under the trade designation GENAPOL® PF 40 and GENAPOL® PF 80.

The amount of fluoropolymer solids in the dispersion may be upconcentrated as needed or desired to an amount between 30 and 70% by weight. Any of the known upconcentration techniques may be used including ultrafiltration and thermal upconcentration.

The obtained fluoropolymer may be conveniently used in most applications optionally after the addition of non-ionic surfactant and/or upconcentration and without removing the perfluoropolyether surfactant. Nevertheless, for reasons of for example costs, it may be desirable to remove the perfluoropolyether from the dispersion. It has been found that the perfluoropolyether surfactant can be readily removed from the aqueous dispersion using an anion exchange resin. Accordingly, a non-ionic surfactant, e.g. as disclosed above is added to the fluoropolymer dispersion, generally in an amount of 1 to 12% by weight and the fluoropolymer dispersion is then contacted with an anion exchange resin. Such a method is disclosed in detail in WO 00/35971. The anion exchange process is preferably carried out in essentially basic conditions. Accordingly, the ion exchange resin will preferably be in the OH- form although anions like fluoride or sulfate may be used as well. The specific basicity of the ion exchange resin is not very critical. Strongly basic resins are preferred because of their higher efficiency. The process may be carried out by feeding the fluoropolymer dispersion through a column that contains the ion exchange resin or alternatively, the fluoropolymer dispersion may be stirred with the ion exchange resin and the fluoropolymer dispersion may thereafter be isolated by filtration. The perfluoropolyether surfactant may subsequently be recovered from the anion exchange resin by eluting the loaded resin. A suitable mixture for eluting the anion exchange resin is a mixture of ammonium chloride, methanol and water.

### EXAMPLES

### Test Methods:

The latex particle size determination was conducted by means of dynamic light scattering with a *Malvern Zetazizer 1000 HSA* in accordance to ISO/DIS 13321. Prior to the measurements, the polymer latexes as yielded from the polymerisations were diluted with 0.001 mol/L KCl-solution, the measurement temperature was 25°C in all cases. The reported average is the Z-average particle diameter.

### SSG

Polymer Density was measured according to ASTM4894 Method D792.

### The polymerization

The polymerization experiments were performed in a 40 L autoclave equipped with an impeller agitator and a baffle. The autoclave was evacuated and than charged with 33 l of deionized water and set to 35°C. Agitation was started at 160 rpm and in three following cycles, the vessel was evacuated and subsequently charged with nitrogen to assure that all oxygen had been removed. Another cleaning cycle pas performed using TFE. After pressurizing to 0.2 MPA the TFE was released to combustion and the reactor was evacuated again. Then 140 mmol fluorinated emulsifier as specified in table 1 and the following materials were added: 24 mg of Cupper sulfate penta hydrate, 0.6mg of sulphuric acid and 8g of a 25% by weight of aqueous ammonia solution and 5.6 g of PPVE-2 mixed with a small amount of water. Finally the reactor was pressurized with TFE to 0.2 MPA and 50 g of HFP were added. The reactor was than set to 1.5 MPa using TFE and 200ml of an aqueous initiator solution containing 187mg of sodium sulfite and 429 mg of ammonium peroxodisulfate was pumped into the vessel The beginning of the polymerization is indicated by a pressure drop. During polymerization the pressure was maintained at 1.5 MPa by feeding TFE into the gas phase. After 3.64 kg of TFE had been added, the monomer valve was closed. The characteristics of the obtained polymer dispersion are summarized in table 1.

1000 ml of this polymer dispersion was coagulated by adding 20ml hydrochloric acid under agitation. When coagulation was performed 100 ml of benzene were added and stirred again. After dewatering, the latex was washed several times with deionized water. The polymer was dried overnight at 100°C in a vacuum oven.

| | Comparative Example | Example 1 |
|---|---|---|
| | | **(not claimed)** |
| Formula | C₇F₁₅COONH₄ | CF₃OC₃F₆OCF(CF₃)COONH₄ |
| Polymerization Time (min.) | 81 | 66 |
| Average Particle Size (nm) | 103 | 109 |
| SSG g/cm³ | 2.148 | 2.154 |
| Solids content (% by weight) | 9.9 | 9.8 |

## Claims

1. Method for making a fluoropolymer comprising an aqueous emulsion polymerization of one or more fluorinated monomers wherein said aqueous emulsion polymerization is carried out in the presence of a perfluoropolyether as an emulsifier, said perfluoropolyether being selected from the group consisting of perfluoropolyethers according to formula (I):
CF₃-(OCF₂)ₘ-O-CF₂-X (I)
wherein m has a value of 1 to 6 and X represents a carboxylic acid group or salt thereof;
perfluoropolyethers according to formula (II):
CF₃-O-(CF₂)₃-(OCF(CF₃)-CF₂)_{z}-O-L-Y (II)
wherein z has a value of 0, 1, 2 or 3, L represents a divalent linking group selected from -CF₂- and -CF₂CF₂- and Y represents a carboxylic acid group or salt thereof; and
mixtures of perfluoropolyethers according to formula (I), (II), or combination thereof.

2. Method according to claim 1 wherein said one or more fluorinated monomers comprise one or more gaseous fluorinated monomers.

3. Method according to claim 1 wherein said one or more fluorinated monomers comprise perfluorinated monomers.

4. Method according to claim 1 wherein said aqueous emulsion polymerization is carried out in the presence of a fluorinated liquid and wherein said fluorinated liquid is emulsified using said perfluoropolyether as an emulsifier.

5. Method according to claim 1 wherein said aqueous emulsion polymerization is carried out using said perfluoropolyether as the only emulsifier.

6. Method according to claim 1 wherein the amount of said perfluoropolyether is between 0.01 and 5 % by weight based on the amount of water in the emulsion polymerization.

7. A dispersion comprising an aqueous dispersion of a fluoropolymer and a perfluoropolyether as an emulsifier, said perfluoropolyether being selected from the group consisting of perfluoropolyethers according to formula (I):
CF₃-(OCF₂)ₘ-O-CF₂-X (I)
wherein m has a value of 1 to 6 and X represents a carboxylic acid group or salt thereof;
perfluoropolyethers according to formula (II):
CF₃-O-(CF₂)₃-(OCF(CF₃)-CF₂)_{z}-O-L-Y (II)
wherein z has a value of 0, 1, 2 or 3, L represents a divalent linking group selected from -CF₂- and -CF₂CF₂- and Y represents a carboxylic acid group or salt thereof; and
mixtures of perfluoropolyethers according to formula (I), (II), or combination thereof.

8. A dispersion according to claim 7 wherein said dispersion is free of perfluoroalkanoic acids or salts thereof.

9. A dispersion according to claim 7 wherein the amount of said perfluoropolyether is between 0.001 and 5 % by weight based on the fluoropolymer solids.

10. A dispersion according to claim 7 wherein the amount of fluoropolymer solids is between 5% and 30% by weight.

11. A dispersion according to claim 7 wherein the amount of Fluoropolymer solids is more than 30 and up to 70% by weight.

12. A dispersion according to claim 7 wherein the dispersion further comprises a non-ionic surfactant.

13. A method comprising coating or impregnating a substrate using an aqueous dispersion as defined in Claim 7.

## Patentansprüche

1. Verfahren zur Herstellung eines Fluorpolymers, umfassend eine wäßrige Emulsionspolymerisation eines oder mehrerer fluorierter Monomere, wobei die wäßrige Emulsionspolymerisation in Gegenwart eines Perfluorpolyethers als Emulgator durchgeführt wird, wobei der Perfluorpolyether aus der Gruppe bestehend aus
Perfluorpolyethern der Formel (I):
CF₃-(OCF₂)ₘ-O-CF₂-X (I)
worin m einen Wert von 1 bis 6 aufweist und X für eine Carbonsäuregruppe oder ein Salz davon steht;
Perfluorpolyethern der Formel (II):
CF₃-O-(CF₂)₃-(OCF(CF₃)-CF₂)_{z}-O-L-Y (II)
worin z einen Wert von 0, 1, 2 oder 3 aufweist, L für eine unter -CF₂- und -CF₂CF₂- ausgewählte zweiwertige Brückengruppe steht und Y für eine Carbonsäuregruppe oder ein Salz davon steht; und Mischungen von Perfluorpolyethern der Formel (I), (II) oder Kombinationen davon ausgewählt wird.

2. Verfahren nach Anspruch 1, wobei das eine bzw. die mehreren fluorierten Monomere ein oder mehrere gasförmige fluorierte Monomere umfassen.

3. Verfahren nach Anspruch 1, wobei das eine bzw. die mehreren fluorierten Monomere perfluorierte Monomere umfassen.

4. Verfahren nach Anspruch 1, wobei die wäßrige Emulsionspolymerisation in Gegenwart einer fluorierten Flüssigkeit durchgeführt wird und die fluorierte Flüssigkeit unter Verwendung des Perfluorpolyethers als Emulgator emulgiert wird.

5. Verfahren nach Anspruch 1, wobei die wäßrige Emulsionspolymerisation unter Verwendung des Perfluorpolyethers als einzigem Emulgator durchgeführt wird.

6. Verfahren nach Anspruch 1, wobei die Menge des Perfluorpolyethers zwischen 0,01 und 5 Gew.-%, bezogen auf die Wassermenge in der Emulsionspolymerisation, liegt.

7. Dispersion, umfassend eine wäßrige Dispersion eines Fluorpolymers und eines Perfluorpolyethers als Emulgator, wobei der Perfluorpolyether aus der Gruppe bestehend aus
Perfluorpolyethern der Formel (I):
CF₃-(OCF₂)ₘ-O-CF₂-X (I)
worin m einen Wert von 1 bis 6 aufweist und X für eine Carbonsäuregruppe oder ein Salz davon steht;
Perfluorpolyethern der Formel (II):
CF₃-O-(CF₂)₃-(OCF(CF₃)-CF₂)_{z}-O-L-Y (II)
worin z einen Wert von 0, 1, 2 oder 3 aufweist, L für eine unter -CF₂- und -CF₂CF₂- ausgewählte zweiwertige Brückengruppe steht und Y für eine Carbonsäuregruppe oder ein Salz davon steht; und Mischungen von Perfluorpolyethern der Formel (I), (II) oder Kombinationen davon ausgewählt ist.

8. Dispersion nach Anspruch 7, wobei die Dispersion frei von Perfluoralkansäuren oder Salzen davon ist.

9. Dispersion nach Anspruch 7, wobei die Menge des Perfluorpolyethers zwischen 0,001 und 5 Gew.-%, bezogen auf die Fluorpolymer-Feststoffe, liegt.

10. Dispersion nach Anspruch 7, wobei die Menge der Fluorpolymer-Feststoffe zwischen 5 und 30 Gew.-% liegt.

11. Dispersion nach Anspruch 7, wobei die Menge der Fluorpolymer-Feststoffe mehr als 30 und bis zu 70 Gew.-% beträgt.

12. Dispersion nach Anspruch 7, wobei die Dispersion ferner ein nichtionisches Tensid umfaßt.

13. Verfahren, bei dem man ein Substrat mit einer wäßrigen Dispersion gemäß Anspruch 7 beschichtet oder imprägniert.

## Revendications

1. Méthode de fabrication d'un fluoropolymère comprenant une polymérisation en émulsion aqueuse d'un ou plusieurs monomères fluorés, **caractérisée en ce que** ladite polymérisation en émulsion aqueuse est effectuée en présence d'un perfluoropolyéther en tant qu'émulsifiant, ledit perfluoropolyéther étant choisi dans le groupe constitué de
perfluoropolyéthers selon la formule (I) :
CF₃-(OCF₂)ₘ-O-CF₂-X (I)
dans laquelle m a une valeur de 1 à 6 et X représente un groupement acide carboxylique ou un sel de celui-ci ;
de perfluoropolyéthers selon la formule (II) :
CF₃-O-(CF₂)₃-(OCF(CF₃)-CF₂)_{z}-O-L-Y (II)
dans laquelle z a une valeur de 0, 1, 2 ou 3, L représente un groupement lieur divalent choisi parmi -CF₂- et -CF₂CF₂- et Y représente un groupement acide carboxylique ou un sel de celui-ci ; et
des mélanges de perfluoropolyéthers selon les formules (I), (II), ou une combinaison de ceux-ci.

2. Méthode selon la revendication 1, **caractérisée en ce que** ledit ou lesdits un ou plusieurs monomères fluorés comprennent un ou plusieurs monomères fluorés gazeux.

3. Méthode selon la revendication 1, **caractérisée en ce que** ledit ou lesdits un ou plusieurs monomères fluorés comprennent des monomères perfluorés.

4. Méthode selon la revendication 1, **caractérisée en ce que** ladite polymérisation en émulsion aqueuse est effectuée en présence d'un liquide fluoré et **en ce que** ledit liquide fluoré est émulsifié en utilisant ledit perfluoropolyéther en tant qu'émulsifiant.

5. Méthode selon la revendication 1, **caractérisée en ce que** ladite polymérisation en émulsion aqueuse est effectuée en utilisant ledit perfluoropolyéther en tant que seul émulsifiant.

6. Méthode selon la revendication 1, **caractérisée en ce que** la quantité dudit perfluoropolyéther est comprise entre 0,01 et 5 % en poids sur la base de la quantité d'eau dans la polymérisation en émulsion.

7. Dispersion comprenant une dispersion aqueuse d'un fluoropolymère et d'un perfluoropolyéther en tant qu'émulsifiant, ledit perfluoropolyéther étant choisi dans le groupe constitué de
perfluoropolyéthers selon la formule (I) :
CF₃-(OCF₂)ₘ-O-CF₂-X (I)
dans laquelle m a une valeur de 1 à 6 et X représente un groupement acide carboxylique ou un sel de celui-ci ;
de perfluoropolyéthers selon la formule (II) :
CF₃-O-(CF₂)₃-(OCF(CF₃)-CF₂)_{z}-O-L-Y (II)
dans laquelle z a une valeur de 0, 1, 2 ou 3, L représente un groupement lieur divalent choisi parmi -CF₂- et -CF₂CF₂- et Y représente un groupement acide carboxylique ou un sel de celui-ci ; et
des mélanges de perfluoropolyéthers selon les formules (I), (II), ou une combinaison de ceux-ci.

8. Dispersion selon la revendication 7, **caractérisée en ce que** ladite dispersion est dépourvue d'acides perfluoroalcanoïques ou de sels de ceux-ci.

9. Dispersion selon la revendication 7, **caractérisée en ce que** la quantité dudit perfluoropolyéther est comprise entre 0,001 et 5 % en poids sur la base des solides de fluoropolymère.

10. Dispersion selon la revendication 7, **caractérisée en ce** la quantité de solides de fluoropolymère est comprise entre 5 % et 30 % en poids.

11. Dispersion selon la revendication 7, **caractérisée en ce que** la quantité de solides de fluoropolymère est supérieure à 30 et jusqu'à 70 % en poids.

12. Dispersion selon la revendication 7, **caractérisée en ce que** la dispersion comprend en outre un tensioactif non-ionique.

13. Méthode comprenant le revêtement ou l'imprégnation d'un substrat en utilisant une dispersion aqueuse telle que définie dans la revendication 7.
